# EUROPÄISCHE PATENTSCHRIFT

(11) **EP 2 245 642 B1**
(45) Veröffentlichungstag und Bekanntmachung des Hinweises auf die Patenterteilung: **05.10.2016**
(21) Anmeldenummer: 09709749.7
(22) Anmeldetag: 31.01.2009
(51) Int. Cl.: H01G 7/06, H01G 4/33

(54) **ABSTIMMBARER PLANARER FERROELEKTRISCHER KONDENSATOR UND VERFAHREN ZU SEINER HERSTELLUNG**
TUNABLE PLANAR FERROELECTRIC CAPACITOR AND METHOD FOR THE PRODUCTION THEREOF
CONDENSATEUR FERROÉLECTRIQUE PLAN ACCORDABLE ET PROCÉDÉ DE FABRICATION DE CE CONDENSATEUR

(30) Priorität: 11.02.2008 DE 102008008699
(43) Veröffentlichungstag der Anmeldung: 03.11.2010
(73) Patentinhaber: Airbus Defence and Space GmbH, 85521 Ottobrunn (DE)
(72) Erfinder: CHERMAN, Vladimir, B-3001 Heverlee (BE); ZIEGLER, Volker, 85579 Neubiberg (DE)
(74) Vertreter: Isarpatent
(86) Internationale Anmeldenummer: PCT/DE2009/000142
(87) Internationale Veröffentlichungsnummer: WO 2009/100704

(56) Entgegenhaltungen:
- WO-A-2007/086019
- US-A1- 2001 035 543

## Beschreibung

Die Erfindung betrifft einen abstimmbaren planaren ferroelektrischen Kondensator nach dem Oberbegriff des Anspruchs 1, sowie ein Verfahren zur Herstellung eines solchen.

Abstimmbare ferroelektrische Kondensatoren finden Verwendung bei einer Anzahl von integrierten Schaltungen. Sie umfassen im Allgemeinen übereinander auf einem Substrat angeordnet eine Bodenelektrode, eine ferroelektrische Dünnfilmschicht und darüber angeordnete Elektroden, zwischen welchen die kapazitive Kopplung veränderbar ist durch ein von außen an die ferroelektrische Dünnfilmschicht angelegtes Gleichspannungssignal oder niederfrequentes Spannungssignal. Herkömmlich wird die ferroelektrische Schicht auf der leitenden Bodenelektrode erzeugt, wobei hohe Verarbeitungstemperaturen verwendet werden, um eine gute Qualität der ferroelektrischen Schicht sicherzustellen. Die derzeitige Verwendung von leitenden Oxiden als Bodenelektrode, die auf einem dielektrischen Einkristall als Substrat ausgebildet werden, gestatten ein Wachstum von ferroelektrischen Filmen bei hoher Temperatur und sehr guter Qualität, ist jedoch verbunden mit hohen Verlusten im Mikrowellenbereich und einem Mangel an Kompatibilität mit Standard-Siliziumtechnologien. Für Mikrowellen sind ferroelektrische MIM-Strukturen mit Platin oder Platin/Gold-Bodenelektroden nützlicher, welche einen geringeren Mikrowellenverlust mit sich bringen, aber auch eine Verminderung der Prozesstemperatur und somit der Qualität des ferroelektrischen Films.

Dokument WO2007/086019A offenbart einen planaren ferroelektrischen Kondensator mit einen Substrat. Der Verfahren des Dokuments zeigt weiterhin die Herstellung einer Verbindung zwischen zwei Komponenten durch eine galvanische Struktur. Dokument US2001/035543A1 offenbart einen planaren ferroelektrischen Kondensator, von dem sich der Erfindung dadurch unterscheidet, dass die Elektroden galvanisch getrennt sind.

Die Aufgabe der Erfindung ist es, einen verbesserten abstimmbaren planaren ferroelektrischen Kondensator zu schaffen, insbesondere einen solchen, bei dem die ferroelektrische Schicht bei hoher Temperatur und mit hoher Qualität erzeugt werden kann und der einen geringen Mikrowellenverlust aufweist. Es soll auch ein Verfahren zur Herstellung eines solchen verbesserten abstimmbaren Kondensators angegeben werden.

Die Aufgabe wird gelöst durch einen abstimmbaren planaren ferroelektrischen Kondensator mit den Merkmalen des Anspruchs 1.

Vorteilhafte Ausführungsformen und Weiterbildungen des erfindungsgemäßen abstimmbaren Kondensators sind in den Unteransprüchen angegeben.

Weiter wird die Aufgabe gelöst durch ein Verfahren zur Herstellung eines abstimmbaren planaren ferroelektrischen Kondensators mit den Merkmalen des Anspruchs 13.

Besondere Ausführungsformen des erfindungsgemäßen Verfahrens sind durch Anspruch 14 geschützt.

Durch die Erfindung wird ein abstimmbarer planarer ferroelektrischer Kondensator mit einem Substrat, zwei Elektroden, die nebeneinander auf dem Substrat angeordnet sind, und einer unter den Elektroden angeordneten Bodenelektrode, die zumindest von einer der beiden Elektroden galvanisch getrennt ist, und mit einer zumindest teilweise zwischen den Elektroden und der Bodenelektrode vorgesehenen ferroelektrischen Schicht, welche in Ansprache auf ein angelegtes Gleichspannungs- oder niederfrequentes Signal zur Veränderung der kapazitiven Kopplung zwischen den Elektroden vorgesehen ist, geschaffen. Erfindungsgemäß ist die Bodenelektrode durch eine im Substrat ausgebildete gut leitende Implantationsschicht gebildet.

Gemäß einem Ausführungsbeispiel des erfindungsgemäßen abstimmbaren Kondensators ist es vorgesehen, dass die die Bodenelektrode bildende Implantationsschicht mit einer der beiden Elektroden galvanisch verbunden ist. Gemäß einer Weiterbildung hiervon kann es vorgesehen sein, dass die die Bodenelektrode bildende Implantationsschicht galvanisch mit einer der beiden Elektroden verbunden ist, die direkt auf dem Substrat ausgebildet ist und die Implantationsschicht überlappt.

Gemäß einer alternativen Ausführungsform kann es vorgesehen sein, dass die die Bodenelektrode bildende Implantationsschicht galvanisch mit einer der beiden Elektroden verbunden ist über eine galvanisch leitende Verbindungsschicht, die mindestens in einem Teil eines Überlappungsbereichs zwischen der Implantationsschicht und der besagten einen Elektrode vorgesehen ist.

Dabei kann die galvanisch leitende Verbindungsschicht in dem Überlappungsbereich in eine auf dem Substrat ausgebildete isolierende Schicht eingefügt sein.

Gemäß einer weiteren Ausführungsform des abstimmbaren Kondensators kann die ferroelektrische Schicht zwischen den Elektroden einerseits und der die Bodenelektrode bildenden Implantationsschicht andererseits angeordnet und mit diesen jeweils in Kontakt stehen.

Dabei kann es vorgesehen sein, dass die Elektroden und die Implantationsschicht überlappend angeordnet sind, und dass die ferroelektrische Schicht sich über die Implantationsschicht und in die Überlappung zwischen den Elektroden und der Implantationsschicht erstreckt.

Dabei kann die ferroelektrische Schicht auf dem Substrat ausgedehnt und sich unter den Elektroden erstreckend vorgesehen sein.

Gemäß einer weiteren Ausführungsform des erfindungsgemäßen abstimmbaren Kondensators ist auf dem Substrat eine isolierende Zwischenschicht ausgebildet, welche sich zwischen dem Substrat einerseits und den Elektroden andererseits erstreckt und in die die ferroelektrische Schicht eingefügt ist.

Dabei kann die ferroelektrische Schicht sich in einem Überlappungsbereich zwischen der Implantationsschicht und zumindest einer der Elektroden erstrecken und mit der Implantationsschicht und der zumindest einen Elektrode in Kontakt stehen.

Das Substrat kann insbesondere ein Siliziumsubstrat sein.

Die auf dem Substrat ausgebildete isolierende Schicht kann eine Siliziumoxidschicht sein.

Weiter wird durch die Erfindung ein Verfahren zur Herstellung eines abstimmbaren planaren ferroelektrischen Kondensators geschaffen, mit einem Substrat, auf dem zwei Elektroden vorgesehen werden, wobei unter den Elektroden eine Bodenelektrode ausgebildet wird, die zumindest von einer der beiden Elektroden galvanisch getrennt ist, und wobei eine zumindest teilweise zwischen den Elektroden und der Bodenelektrode befindliche ferroelektrische Schicht vorgesehen wird, welche in Ansprache auf ein angelegtes Gleichspannungs- oder niederfrequentes Signal zur Veränderung der kapazitiven Kopplung zwischen den Elektroden dient. Erfindungsgemäß wird die Bodenelektrode durch eine gut leitende Implantationsschicht im Substrat ausgebildet.

Gemäß Weiterbildungen des erfindungsgemäßen Verfahrens wird damit ein abstimmbarer Kondensator mit einem der Merkmale 2 bis 12 hergestellt.

Im Folgenden werden Ausführungsbeispiele der Erfindung anhand der Zeichnung erläutert.

Es zeigt:
Fig. 1 eine schematisierte vergrößerte Querschnittsansicht eines abstimmbaren planaren ferroelektrischen Kondensators gemäß einem ersten Ausführungsbeispiel der Erfindung;
Fig. 2 eine schematisierte vergrößerte Querschnittsansicht eines abstimmbaren planaren ferroelektrischen Kondensators gemäß einem zweiten Ausführungsbeispiel der Erfindung;
Fig. 3 eine schematisierte vergrößerte Querschnittsansicht eines abstimmbaren planaren ferroelektrischen Kondensators gemäß einem dritten Ausführungsbeispiel der Erfindung; und
Fig. 4 eine schematisierte vergrößerte Querschnittsansicht einer integrierten Siliziumschaltung, bei der ein abstimmbarer planarer ferroelektrischer Kondensator, wie er mit einem Ausführungsbeispiel in Fig. 1 gezeigt ist, mit weiteren Komponenten kombiniert ist.

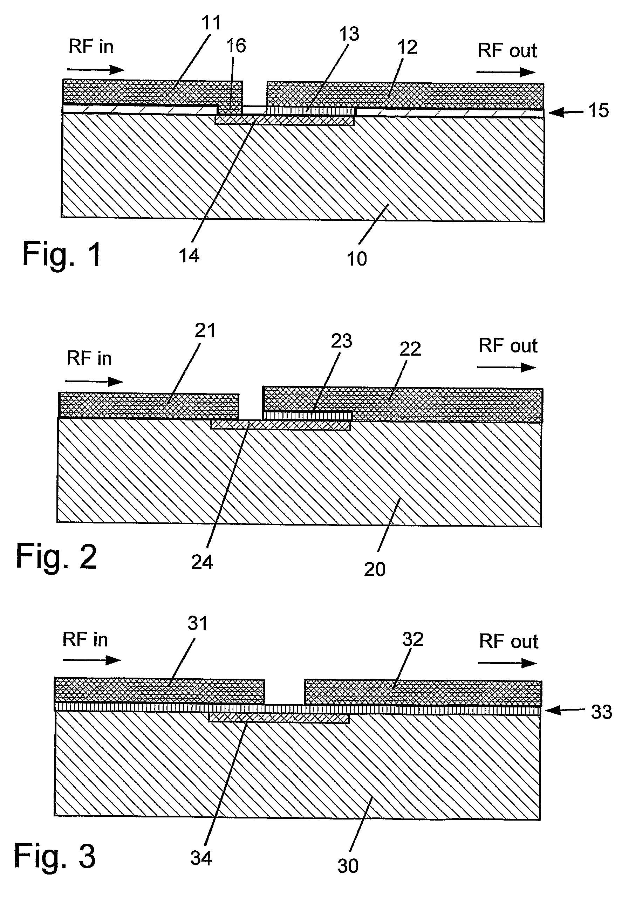

In den Fig. 1 bis 3 sind drei Ausführungsbeispiele von abstimmbaren planaren ferroelektrischen Kondensatoren dargestellt, welche jeweils auf einem Substrat 10; 20; 30 mit geringer Leitfähigkeit bzw. hohem Widerstand, hier ein Siliziumsubstrat, ausgebildet sind. Der abstimmbare Kondensator umfasst auf dem Substrat 10; 20; 30 nebeneinander galvanisch getrennt angeordnete Elektroden 11, 12; 21, 22; 31, 32, unter denen eine Bodenelektrode 14; 24; 34 vorgesehen ist, die durch eine im Substrat 10; 20; 30 ausgebildete gut leitende Implantationsschicht verwirklicht ist. Zwischen den Elektroden 11, 12; 21, 22; 31, 32 und der Bodenelektrode 14; 24; 34 ist eine ferroelektrische Schicht 13; 23; 33 vorgesehen, deren Dielektrizitätskonstante durch ein von außen angelegtes elektrisches Feld, das durch ein Gleichspannungssignal oder ein niederfrequentes Signal erzeugt wird, veränderbar ist, wodurch wiederum die kapazitive Kopplung zwischen den Elektroden 11, 12; 21, 22; 31, 32 veränderbar ist. Die Elektroden 11, 12; 21, 22; 31, 32 sind in Form einer metallischen Beschichtung auf der Oberseite des von dem Substrat 10; 20; 30 getragenen Aufbaus ausgebildet. Wird ein elektrisches Hochfrequenzsignal der ersten Elektrode 11; 21; 31 des abstimmbaren Kondensators zugeführt (RF in), so wird es über die die Bodenelektrode 14; 24; 34 bildende Implantationsschicht und über die ferroelektrische Schicht 13; 23; 33 kapazitiv an die zweite Elektrode 12; 22; 32 angekoppelt und von dieser weitergeleitet (RF out). Durch das angelegte Gleichspannungssignal oder niederfrequente Signal wird die dielektrische Konstante der ferroelektrischen Schicht 13; 23; 33 und damit die Kapazität des abstimmbaren Kondensators verändert.

Bei den in den Fig. 1 und 2 gezeigten Ausführungsbeispielen ist die die Bodenelektrode 14; 24 bildende Implantationsschicht mit der linken, ersten Elektrode 11; 21 galvanisch verbunden.

Bei dem in Fig. 1 gezeigten Ausführungsbeispiel nämlich über eine galvanisch leitende, insbesondere metallische Verbindungsschicht 16, die zumindest in einem Teil eines Überlappungsbereichs zwischen der Implantationsschicht 14 und der ersten Elektrode 11 vorgesehen ist. Diese Verbindungsschicht 16 kann insbesondere integral mit der ersten Elektrode 11 ausgebildet und gleichzeitig mit dieser aufgebracht werden und mit der Implantationsschicht 14 in Verbindung stehen über eine im Überlappungsbereich mit der Implantationsschicht 14 ausgebildete Aussparung in der isolierenden Siliziumschicht 15. Alternativ kann die Verbindungsschicht 16 separat von der ersten Elektrode 11 ausgebildet werden. Auf dem Substrat 10 ist durch Bildung von Siliziumoxid eine isolierende Schicht 15 ausgebildet, auf der ihrerseits die die beiden Elektroden 11, 12 bildende Metallisierung vorgesehen ist. Die isolierende Schicht 15 hat im Bereich der ferroelektrischen Schicht 13 eine Aussparung, so dass die ferroelektrische Schicht 13 mit der Implantationsschicht 14 und der zweiten Elektrode 12 in Kontakt steht.

Bei dem in Fig. 2 gezeigten Ausführungsbeispiel ist die die Bodenelektrode 24 bildende Implantationsschicht wiederum galvanisch mit der ersten Elektrode 21 verbunden, die hier jedoch direkt auf dem Substrat 20 ausgebildet ist, welches, wie bereits vorher erläutert, eine geringe Leitfähigkeit bzw. einen hohen Widerstand hat. Eine isolierende Siliziumoxidschicht wie die isolierende Schicht 15 bei Fig. 1 kann nämlich weggelassen werden, wenn sie nicht für andere Schaltungsbestandteile auf demselben Substrat erforderlich ist. Somit steht die Implantationsschicht 24 mit der ersten Elektrode 21 in einem Überlappungsbereich mit dieser direkt in galvanischem Kontakt, während zwischen der Implantationsschicht 24 und der zweiten Elektrode 22 die nichtleitende ferroelektrische Schicht 23 eingefügt und damit die Implantationsschicht 24 von der zweiten Elektrode 22 galvanisch isoliert ist.

Bei dem in Fig. 3 gezeigten Ausführungsbeispiel ist auf dem Substrat 30 wiederum keine isolierende Siliziumoxidschicht vorhanden, vielmehr ist die ferroelektrische Schicht 33 sowohl über die Oberfläche des Substrats 30 als auch über die Implantationsschicht 34 ausgedehnt, sie kann beispielsweise die gesamte Oberfläche des Substrats 30 im Bereich des abstimmbaren Kondensators bedecken. Die Elektroden 31, 32 überlappen jeweils die Implantationsschicht 34 und sind jeweils durch die dazwischen befindliche ferroelektrische Schicht 33 kapazitiv an diese und damit auch gegenseitig gekoppelt. Durch Anlegen des besagten Gleichspannungs- oder niederfrequenten Signals an die beiden Elektroden 31, 32 entsteht insbesondere im Überlappungsbereich mit der Implantationsschicht 34 ein entsprechendes elektrisches Feld, welches die dielektrische Konstante der ferroelektrischen Schicht 33 und damit die kapazitive Kopplung zwischen den beiden Elektroden 31, 32 verändert.

Die Herstellung der die Bodenelektrode 14; 24; 34 bildenden Implantationsschicht kann durch an sich bekannte Implantationsverfahren erfolgen, ebenfalls können die Erzeugung der isolierenden Schicht 15, soweit vorhanden, sowie die Erzeugung der ferroelektrischen Schicht 13; 23; 33 und der die Elektroden 11, 12; 21, 22; 31, 32 bildenden Metallisierungen in an sich bekannter Weise vorgenommen werden.

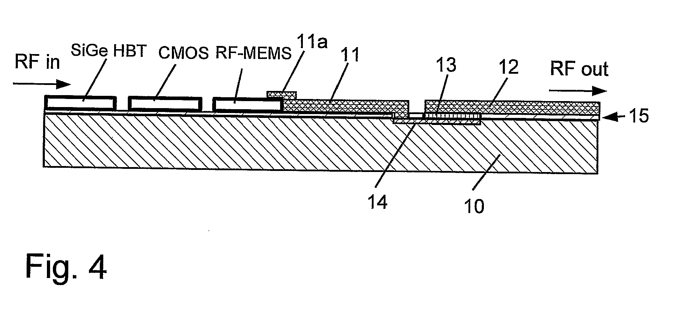

Fig. 4 schließlich zeigt, wie der abstimmbare planare ferroelektrische Kondensator, der gemäß dem in Fig. 1 gezeigten Ausführungsbeispiel hergestellt ist, mit anderen in Siliziumtechnik ausgeführten Komponenten, wie beispielsweise SiGe HBT, CMOS oder HF-MEMS Komponenten, auf einem gemeinsamen Substrat 10 ausgebildet werden kann. In diesem Fall wird der ferroelektrische Film 33 zuerst auf das mit der Implantationsschicht 14 versehene Substrat 10 aufgebracht und dann das Substrat 10 weiter bearbeitet. Die SiGe HBT, CMOS und HF-MEMS Komponenten sind bei dem gezeigten Ausführungsbeispiel in Richtung des zu verarbeitenden Hochfrequenzsignals "RF in" dem abstimmbaren Kondensator vorgeschaltet. Die der ersten Elektrode unmittelbar vorgeschaltete MEMS-Komponente ist über eine Anschlussschicht 11 a mit der ersten Elektrode 11 verbunden, die beispielsweise gemeinsam mit der ersten Elektrode 11 oder separat ausgebildet werden kann.

Durch die Erfindung können abstimmbare ferroelektrische Kondensatorkomponenten geringer Komplexität zu geringen Kosten monolithisch integriert werden. Dies gestattet eine Verwirklichung von neuen Architekturen und Funktionalitäten bei integrierten Schaltkreisen, so wie Verstärkern mit integrierten abstimmbaren Anpassungsnetzwerken oder ein geringes Rauschen aufweisenden Verstärkern mit integrierten Phasenschiebern. Bevorzugte Anwendungen können Multiband-Kommunikationssysteme und Radarsysteme mit phasenveränderlichen Arrays sein.

### Bezugszeichenliste

- 10; 20; 30: Substrat
- 11; 21; 31: (erste) Elektrode
- 11a: Anschlussschicht
- 12; 22; 32: (zweite) Elektrode
- 13; 23; 33: ferroelektrische Schicht
- 14; 24; 34: Bodenelektrode, Implantationsschicht
- 15: isolierende Schicht
- 16: galvanisch leitende Verbindungsschicht

## Patentansprüche

1. Abstimmbarer planarer ferroelektrischer Kondensator mit einem Substrat (10; 20; 30), zwei Elektroden (11, 12; 21, 22; 31, 32), die nebeneinander auf dem Substrat (10; 20; 30) angeordnet sind, und einer unter den Elektroden (11, 12; 21, 22; 31, 32) angeordneten Bodenelektrode (14; 24; 34), die zumindest von einer der beiden Elektroden (11, 12; 21, 22; 31, 32) galvanisch getrennt ist, und mit einer zumindest teilweise zwischen den Elektroden (11, 12; 21, 22; 31, 32) und der Bodenelektrode (14; 24; 34) vorgesehenen ferroelektrischen Schicht (13; 23; 33), welche in Ansprache auf ein angelegtes Gleichspannungs- oder niederfrequentes Signal zur Veränderung der kapazitiven Kopplung zwischen den Elektroden (11, 12; 21, 22; 31, 32) vorgesehen ist, **dadurch gekennzeichnet, dass** die Bodenelektrode (14; 24; 34) durch eine im Substrat (10; 20; 30) ausgebildete gut leitende Implantationsschicht gebildet ist.

2. Abstimmbarer Kondensator nach Anspruch 1, **dadurch gekennzeichnet, dass** die die Bodenelektrode (14; 24; 34) bildende Implantationsschicht mit einer der beiden Elektroden (11; 21; 31) galvanisch verbunden ist.

3. Abstimmbarer Kondensator nach Anspruch 2, **dadurch gekennzeichnet, dass** die die Bodenelektrode (24) bildende Implantationsschicht galvanisch mit einer der leitenden Elektroden (21) verbunden ist, welche direkt auf dem Substrat (20) ausgebildet ist und die Implantationsschicht (24) überlappt.

4. Abstimmbarer Kondensator nach Anspruch 2, **dadurch gekennzeichnet, dass** die die Bodenelektrode (14) bildende Implantationsschicht galvanisch mit einer der beiden Elektroden (11) verbunden ist über eine galvanisch leitende Verbindungsschicht (16), die zumindest in einem Teil eines Überlappungsbereichs zwischen der Implantationsschicht (14) und der besagten einen Elektrode (11) vorgesehen ist.

5. Abstimmbarer Kondensator nach Anspruch 4, **dadurch gekennzeichnet, dass** die galvanisch leitende Verbindungsschicht (16) in dem Überlappungsbereich in eine auf dem Substrat (10) ausgebildete isolierende Schicht (15) eingefügt ist.

6. Abstimmbarer Kondensator nach Anspruch 1, **dadurch gekennzeichnet, dass** die ferroelektrische Schicht (33) zwischen den Elektroden (31, 32) und der die Bodenelektrode (34) bildenden Implantationsschicht angeordnet und mit diesen jeweils in Kontakt steht.

7. Abstimmbarer Kondensator nach Anspruch 6, **dadurch gekennzeichnet, dass** die Elektroden (31, 32) die Implantationsschicht (34) überlappend angeordnet sind, und dass die ferroelektrische Schicht (33) sich über die Implantationsschicht (34) und in die Überlappung zwischen den Elektroden (31, 32) und der Implantationsschicht (34) erstreckt.

8. Abstimmbarer Kondensator nach Anspruch 7, **dadurch gekennzeichnet, dass** die ferroelektrische Schicht (33) auf dem Substrat (30) ausgedehnt und sich unter den Elektroden (31, 32) erstreckt.

9. Abstimmbarer Kondensator nach einem der Ansprüche 1 bis 7, **dadurch gekennzeichnet, dass** auf dem Substrat (10) eine isolierende Zwischenschicht (15) ausgebildet ist, welche sich zwischen dem Substrat (10) und den Elektroden (11, 12) erstreckt und in die die ferroelektrische Schicht (13) eingefügt ist.

10. Abstimmbarer Kondensator nach Anspruch 9, **dadurch gekennzeichnet, dass** die ferroelektrische Schicht (13) sich in einem Überlappungsbereich zwischen der Implantationsschicht (14) und zumindest einer der Elektroden (12) erstreckt und mit der Implantationsschicht (14) und der zumindest einen Elektrode (12) in Kontakt steht.

11. Abstimmbarer Kondensator nach einem der Ansprüche 1 bis 10, **dadurch gekennzeichnet, dass** das Substrat (10; 20; 30) ein Siliziumsubstrat ist.

12. Abstimmbarer Kondensator nach einem der Ansprüche 5 bis 11, **dadurch gekennzeichnet, dass** die auf dem Substrat (10) ausgebildete isolierende Schicht (15) eine Siliziumoxidschicht ist.

13. Verfahren zur Herstellung eines abstimmbaren planaren ferroelektrischen Kondensators mit einem Substrat (10; 20; 30), auf dem zwei Elektroden (11, 12; 21, 22; 31, 32) vorgesehen werden, wobei unter den Elektroden (11, 12; 21, 22; 31, 32) eine Bodenelektrode (14; 24; 34) ausgebildet wird, die zumindest von einer der beiden Elektroden (11, 12; 21, 22; 31, 32) galvanisch getrennt ist, und wobei eine zumindest teilweise zwischen den Elektroden (11, 12; 21, 22; 31, 32) und der Bodenelektrode (14; 24; 34) befindliche ferroelektrische Schicht (13; 23; 33) vorgesehen wird, welche in Ansprache auf ein angelegtes Gleichspannungs- oder niederfrequentes Signal zur Veränderung der kapazitiven Kopplung zwischen den Elektroden (11, 12; 21, 22; 31, 32) dient, **dadurch gekennzeichnet, dass** die Bodenelektrode (14; 24; 34) durch eine gut leitende Implantationsschicht im Substrat (10; 20; 30) ausgebildet wird.

14. Verfahren zur Herstellung eines abstimmbaren Kondensators nach Anspruch 13, **dadurch gekennzeichnet, dass** ein abstimmbarer Kondensator mit den Merkmalen eines der Ansprüche 2 bis 12 hergestellt wird.

## Claims

1. Tunable planar ferroelectric capacitor having a substrate (10; 20; 30), two electrodes (11, 12; 21, 22; 31, 32) that are arranged adjacent to one another on the substrate (10; 20; 30), and a base electrode (14, 24, 34) that is arranged below the electrodes (11, 12; 21, 22; 31, 32), said base electrode being galvanically separated from at least one of the two electrodes (11, 12; 21, 22; 31, 32), and having a ferroelectric layer (13; 23; 33) that is provided at least in part between the electrodes (11, 12; 21, 22; 31, 32) and the base electrode (14; 24; 34), said layer being provided in response to an applied direct current voltage signal or low frequency signal, so as to change the capacitive coupling between the electrodes (11, 12; 21, 22; 31, 32), **characterized in that** the base electrode (14; 24; 34) is formed by means of an implantation layer that is embodied in the substrate (10; 20; 30) and is highly conductive.

2. Tunable capacitor according to Claim 1, **characterized in that** the implantation layer that forms the base electrode (14; 24; 34) is galvanically connected to one of the two electrodes (11; 21; 31).

3. Tunable capacitor according to Claim 2, **characterized in that** the implantation layer that forms the base electrode (24) is galvanically connected to one of the conductive electrodes (21) that is embodied directly on the substrate (20) and overlaps the implantation layer (24).

4. Tunable capacitor according to Claim 2, **characterized in that** the implantation layer that forms the base electrode (14) is galvanically connected to one of the two electrodes (11) by way of a galvanically conductive connecting layer (16) that is provided at least in a part of an overlapping region between the implantation layer (14) and the mentioned electrode (11).

5. Tunable capacitor according to Claim 4, **characterized in that** the galvanically conductive connecting layer (16) is inserted into the overlapping region in an insulating layer (15) that is embodied on the substrate (10).

6. Tunable capacitor according to Claim 1, **characterized in that** the ferroelectric layer (33) is arranged between the electrodes (31, 32) and the implantation layer that forms the base electrode (34) and is in each case in contact with said electrodes and implantation layer.

7. Tunable capacitor according to Claim 6, **characterized in that** the electrodes (31, 32) are arranged overlapping the implantation layer (34), and that the ferroelectric layer (33) extends over the implantation layer (34) and into the overlap region between the electrodes (31, 32) and the implantation layer (34).

8. Tunable capacitor according to Claim 7, **characterized in that** the ferroelectric layer (33) expands on the substrate (30) and extends under the electrodes (31, 32).

9. Tunable capacitor according to any one of the claims 1 to 7, **characterized in that** an insulating intermediate layer (15) is embodied on the substrate (10) and said insulating intermediate layer extends between the substrate (10) and the electrodes (11, 12) and is inserted into the ferroelectric layer (13).

10. Tunable capacitor according to Claim 9, **characterized in that** the ferroelectric layer (13) extends in an overlapping region between the implantation layer (14) and at least one of the electrodes (12) and is in contact with the implantation layer (14) and the at least one electrode (12).

11. Tunable capacitor according to any one of the claims 1 to 10, **characterized in that** the substrate (10, 20, 30) is a silicon substrate.

12. Tunable capacitor according to any one of the claims 5 to 11, **characterized in that** the insulating layer (15) that is embodied on the substrate (10) is a silicone oxide layer.

13. Method for producing a tunable planar ferroelectric capacitor having a substrate (10; 20; 30) on which two electrodes (11, 12; 21, 22; 31, 32) are provided, wherein a base electrode (14; 24; 34) is embodied under the electrodes (11, 12; 21, 22; 31, 32), said base electrode being galvanically separated from one of the two electrodes (11, 12; 21, 22; 31, 32) and wherein a ferroelectric layer (13; 23; 33) is provided located at least in part between the electrodes (11, 12; 21, 22; 31, 32) and the base electrode (14; 24; 34), said being used in response to an applied direct current voltage signal or a low frequency voltage signal, so as to change the capacitive coupling between the electrodes (11, 12; 21, 22; 31, 32) **characterized in that** the base electrode (14; 24; 34) is embodied by means of a highly conductive implantation layer in the substrate (10; 20; 30).

14. Method for producing a tunable capacitor according to Claim 13, **characterized in that** a tunable capacitor having the featues of any one of the claims 2 to 12 is produced.

## Revendications

1. Condensateur ferroélectrique planaire accordable comportant un substrat (10 ; 20 ; 30), deux électrodes (11, 12 ; 21, 22 ; 31, 32), qui sont disposées l'une à côté de l'autre sur le substrat (10 ; 20 ; 30), et une électrode de fond (14 ; 24 ; 34) disposée en dessous des électrodes (11, 12 ; 21, 22 ; 31, 32), laquelle est galvaniquement séparée au moins de l'une des deux électrodes (11, 12 ; 21, 22 ; 31, 32), et comportant une couche ferroélectrique (13 ; 23 ; 33) ménagée au moins en partie entre les électrodes (11, 12 ; 21, 22 ; 31, 32) et l'électrode de fond (14 ; 24 ; 34), laquelle couche ferroélectrique est ménagée pour modifier le couplage capacitif entre les électrodes (11, 12 ; 21, 22 ; 31, 32) en réponse à un signal appliqué de tension continue ou à basse fréquence, **caractérisé en ce que** l'électrode de fond (14 ; 24 ; 34) est formée par une couche d'implantation bonne conductrice, réalisée dans le substrat (10 ; 20 ; 30).

2. Condensateur accordable selon la revendication 1, **caractérisé en ce que** la couche d'implantation formant l'électrode de fond (14 ; 24 ; 34) est galvaniquement reliée à l'une des deux électrodes (11 ; 21 ; 31).

3. Condensateur accordable selon la revendication 2, **caractérisé en ce que** la couche d'implantation formant l'électrode de fond (14 ; 24 ; 34) est galvaniquement reliée à l'une des électrodes conductrices (21), laquelle est directement réalisée sur le substrat (20) et chevauche la couche d'implantation (24).

4. Condensateur accordable selon la revendication 2, **caractérisé en ce que** la couche d'implantation formant l'électrode de fond (14 ; 24 ; 34) est galvaniquement reliée à l'une des deux électrodes (11) par l'intermédiaire d'une couche de liaison (16) galvaniquement conductrice, laquelle est ménagée au moins dans une partie d'une zone de chevauchement située entre la couche d'implantation (14) et ladite électrode (11).

5. Condensateur accordable selon la revendication 4, **caractérisé en ce que** la couche de liaison (16) galvaniquement conductrice dans la zone de chevauchement est insérée dans une couche (15) isolante réalisée sur le substrat (10).

6. Condensateur accordable selon la revendication 1, **caractérisé en ce que** la couche ferroélectrique (33) est disposée entre les électrodes (31, 32) et la couche d'implantation formant l'électrode de fond (34) et est respectivement en contact avec celles-ci.

7. Condensateur accordable selon la revendication 6, **caractérisé en ce que** les électrodes (31, 32) sont disposées en chevauchant la couche d'implantation (34) et **en ce que** la couche ferroélectrique (33) s'étend sur la couche d'implantation (34) et dans le chevauchement entre les électrodes (31, 32) et la couche d'implantation (34).

8. Condensateur accordable selon la revendication 7, **caractérisé en ce que** la couche ferroélectrique (33) s'étend de manière étendue sur le substrat (30) et en-dessous des électrodes (31, 32).

9. Condensateur accordable selon l'une quelconque des revendications 1 à 7, **caractérisé en ce que** sur le substrat (10) est réalisée une couche intermédiaire (15) isolante, laquelle s'étend entre le substrat (10) et les électrodes (11, 12) et est insérée dans la couche ferroélectrique (13).

10. Condensateur accordable selon la revendication 9, **caractérisé en ce que** la couche ferroélectrique (13) s'étend dans une zone de chevauchement située entre la couche d'implantation (14) et au moins une des électrodes (12) et **en ce qu'**elle est en contact avec la couche d'implantation (14) et l'au moins une électrode (12).

11. Condensateur accordable selon l'une quelconque des revendications 1 à 10, **caractérisé en ce que** le substrat (10; 20; 30) est un substrat de silicium.

12. Condensateur accordable selon l'une quelconque des revendications 5 à 11, **caractérisé en ce que** la couche (15) isolante réalisée sur le substrat (10) est une couche d'oxyde de silicium.

13. Procédé de fabrication d'un condensateur ferroélectrique planaire accordable comportant un substrat (10 ; 20 ; 30) sur lequel on ménage deux électrodes (11, 12 ; 21, 22 ; 31, 32), dans lequel procédé on réalise une électrode de fond (14 ; 24 ; 34) en dessous des électrodes, laquelle est galavaniquement séparée au moins de l'une des deux électrodes (11, 12 ; 21, 22 ; 31, 32), et dans lequel on ménage une couche ferroélectrique (13 ; 23 ; 33) se trouvant au moins en partie entre les électrodes (11, 12 ; 21, 22 ; 31, 32) et l'électrode de fond (14 ; 24 ; 34), laquelle couche ferroélectrique sert à modifier le couplage capacitif entre les électrodes (11, 12 ; 21, 22 ; 31, 32) en réponse à un signal appliqué de tension continue ou à basse fréquence, **caractérisé en ce que** l'on ménage l'électrode de fond (14 ; 24 ; 34) dans le substrat (10) au moyen d'une couche d'implantation bonne conductrice.

14. Procédé de fabrication d'un condensateur accordable selon la revendication 13, **caractérisé en ce que** l'on fabrique un condensateur accordable ayant les caractéristiques de l'une quelconque des revendications 2 à 12.
